# EUROPEAN PATENT SPECIFICATION

(11) **EP 2 028 022 B1**
(45) Date of publication and mention of the grant of the patent: **28.04.2010**
(21) Application number: 08162254.0
(22) Date of filing: 12.08.2008
(51) Int. Cl.: B60C 1/00, C08K 5/09, C08K 5/10, C08L 9/00

(54) **Method for making tire with black sidewall and tire made by the method**
Verfahren zur Herstellung eines Reifens mit schwarzer Seitenwand und mit diesem Verfahren hergestellter Reifen
Procédé de fabrication de pneu avec paroi latérale noire et pneu fabriqué à partir du procédé

(30) Priority: 14.08.2007 US 838367
(43) Date of publication of application: 25.02.2009
(73) Proprietor: The Goodyear Tire & Rubber Company, Akron, Ohio 44316-0001 (US)
(72) Inventor: Jung, Manfred Josef, D-66629 Freisen (DE); Frank, Uwe Ernst, D-54329 Konz (DE); Schweitzer, Claude, L-7750 Colmar-Berg (LU); Weydert, Marc, L-8020 Strassen (LU); Linster, Tom Dominique, L-9370 Gilsdorf (LU); Klinkenberg, Maurice Peter Catharina Jozef, L-9188 Vichten (LU); Georges, Damian Wilhelm, L-7260 Bereldange (LU)
(74) Representative: Kutsch, Bernd

(56) References cited:
- JP-A- 7 018 120
- JP-A- 11 071 479
- JP-A- 59 126 443

## Description

### Background of the Invention

Typical rubber compounds used in the production of tire sidewalls include various components that can cause discoloration of the sidewall surface. While a black, shiny sidewall appearance is desirable for aesthetic reasons, with time tire sidewalls may appear grayish owing to this discoloration. Tire users may overcome this through application of liquid, typically silicone, tire dressings applied manually with a cloth or sponge. It would however be advantageous to have a tire with a sidewall that better maintains its black appearance.

### Summary of the Invention

The present invention is directed to a method for maintaining the black sidewall appearance of a tire according to claim 1.

The present invention is also directed to a pneumatic tire according to claim 2.

Dependent claims refer to preferred embodiments of the invention.

### Detailed Description of the Invention

There is disclosed a method for maintaining the black sidewall appearance of a tire, comprising the step of fabricating the tire with a rubber sidewall compound comprising 100 parts by weight of at least one diene based rubber; from 10 to 70 parts by weight, per 100 parts by weight of diene based rubber (phr) of a rubber process oil selected from the group consisting of aromatic oils, paraffinic oils, and low PCA oils; and from 0.5 to 3 parts by weight, per 100 parts by weight of diene based rubber (phr) of a triglyceride derived from fatty acids comprising at least 80 percent by weight of at least one of ricinoleic acid and 12-hydroxy stearic acid.

There is also disclosed a pneumatic tire comprising a sidewall, the sidewall comprising a rubber composition, the rubber composition comprising 100 parts by weight of at least one diene based rubber; from 10 to 70 parts by weight, per 100 parts by weight of diene based rubber (phr) of a rubber process oil selected from the group consisting of aromatic oils, paraffinic oils, and low PCA oils; and from 0.5 to 3 parts by weight, per 100 parts by weight of diene based rubber (phr) of a triglyceride derived from fatty acids comprising at least 80 percent by weight of at least one of ricinoleic acid and 12-hydroxy stearic acid.

The rubber composition includes a triglyceride derived from fatty acids comprising at least 80 percent by weight of ricinoleic acid. In one embodiment, the triglyceride is derived from fatty acids comprising at least 85 percent by weight of ricinoleic acid. In one embodiment, the triglyceride comprises a castor (rincinus) oil, which may comprise triglycerides derived from fatty acids comprising ricinoleic acid, linoleic acid, oleic acid, stearic acid, palmitic acid, dihydroxystearic acid, linolenic acid, and eicosanoic acid. In one embodiment, the triglyceride is derived from fatty acids comprising at least 85 percent by weight of 12-hydroxy stearic acid, or castor wax.

In one embodiment, the triglyceride is present in the rubber composition in a concentration ranging from 0.5 to 3 parts by weight per 100 parts by weight of diene based elastomer (phr). In another embodiment, the triglyceride is present in the rubber composition in a concentration ranging from 1 to 2 parts by weight per 100 parts by weight of diene based elastomer (phr).

The rubber composition may be used with rubbers or elastomers containing olefinic unsaturation. The interchangeable phrases "rubber or elastomer containing olefinic unsaturation" or "diene based elastomer" or "diene based rubber" are intended to include both natural rubber and its various raw and reclaim forms as well as various synthetic rubbers. In the description of this invention, the terms "rubber" and "elastomer" may be used interchangeably, unless otherwise prescribed. The terms "rubber composition," "compounded rubber" and "rubber compound" are used interchangeably to refer to rubber which has been blended or mixed with various ingredients and materials and such terms are well known to those having skill in the rubber mixing or rubber compounding art. Representative synthetic polymers are the homopolymerization products of butadiene and its homologues and derivatives, for example, methylbutadiene, dimethylbutadiene and pentadiene as well as copolymers such as those formed from butadiene or its homologues or derivatives with other unsaturated monomers. Among the latter are acetylenes, for example, vinyl acetylene; olefins, for example, isobutylene, which copolymerizes with isoprene to form butyl rubber; vinyl compounds, for example, acrylic acid, acrylonitrile (which polymerize with butadiene to form NBR), methacrylic acid and styrene, the latter compound polymerizing with butadiene to form SBR, as well as vinyl esters and various unsaturated aldehydes, ketones and ethers, e.g., acrolein, methyl isopropenyl ketone and vinylethyl ether. Specific examples of synthetic rubbers include neoprene (polychloroprene), polybutadiene (including cis-1,4-polybutadiene), polyisoprene (including cis-1,4-polyisoprene), butyl rubber, halobutyl rubber such as chlorobutyl rubber or bromobutyl rubber, styrene/isoprene/butadiene rubber, copolymers of 1,3-butadiene or isoprene with monomers such as styrene, acrylonitrile and methyl methacrylate, as well as ethylene/propylene terpolymers, also known as ethylene/propylene/diene monomer (EPDM), and in particular, ethylene/propylene/ dicyclopentadiene terpolymers. Additional examples of rubbers which may be used include alkoxy-silyl end functionalized solution polymerized polymers (SBR, PBR, IBR and SIBR), silicon-coupled and tin-coupled star-branched polymers. The preferred rubber or elastomers are polybutadiene and SBR.

In one aspect the rubber is preferably of at least two of diene based rubbers. For example, a combination of two or more rubbers is preferred such as cis 1,4-polyisoprene rubber (natural or synthetic, although natural is preferred), 3,4-polyisoprene rubber, styrene/isoprene/butadiene rubber, emulsion and solution polymerization derived styrene/butadiene rubbers, cis 1,4-polybutadiene rubbers and emulsion polymerization prepared butadiene/acrylonitrile copolymers. In one embodiment, a combination of natural rubber, and polybutadiene is used. In one embodiment, a combination of natural rubber, polybutadiene, and styrene-butadiene rubber is used.

In one aspect of this invention, an emulsion polymerization derived styrene/butadiene (E-SBR) might be used having a relatively conventional styrene content of 20 to 28 percent bound styrene or, for some applications, an E-SBR having a medium to relatively high bound styrene content, namely, a bound styrene content of 30 to 45 percent.

By emulsion polymerization prepared E-SBR, it is meant that styrene and 1,3-butadiene are copolymerized as an aqueous emulsion. The bound styrene content can vary, for example, from 5 to 50 percent. In one aspect, the E-SBR may also contain acrylonitrile to form a terpolymer rubber, as E-SBAR, in amounts, for example, of 2 to 30 weight percent bound acrylonitrile in the terpolymer.

Emulsion polymerization prepared styrene/butadiene/acrylonitrile copolymer rubbers containing 2 to 40 weight percent bound acrylonitrile in the copolymer are also contemplated as diene based rubbers for use in this invention.

The solution polymerization prepared SBR (S-SBR) typically has a bound styrene content in a range of 5 to 50, preferably 9 to 36, percent. The S-SBR can be conveniently prepared, for example, by organo lithium catalyzation in the presence of an organic hydrocarbon solvent.

In one embodiment, cis 1,4-polybutadiene rubber (BR) may be used.
Such BR can be prepared, for example, by organic solution polymerization of 1,3-butadiene. The BR may be conveniently characterized, for example, by having at least a 90 percent cis 1,4-content.

The term "phr" as used herein, and according to conventional practice, refers to "parts by weight of a respective material per 100 parts by weight of rubber, or elastomer."

The rubber composition may also include up to 70 phr of processing oil.
Processing oil may be included in the rubber composition as extending oil typically used to extend elastomers. Processing oil may also be included in the rubber composition by addition of the oil directly during rubber compounding. The processing oil used may include both extending oil present in the elastomers, and process oil added during compounding. Suitable process oils include various oils as are known in the art, including aromatic, paraffinic, naphthenic, vegetable oils other than castor oil, and low PCA oils, such as MES, TDAE, SRAE and heavy naphthenic oils. Suitable low PCA oils include those having a polycyclic aromatic content of less than 3 percent by weight as determined by the IP346 method. Procedures for the IP346 method may be found in Standard Methods for Analysis & Testing of Petroleum and Related Products and British Standard 2000 Parts, 2003, 62nd edition, published by the Institute of Petroleum, United Kingdom.

The rubber composition may include from 10 to 150 phr of silica.

The commonly employed siliceous pigments which may be used in the rubber compound include conventional pyrogenic and precipitated siliceous pigments (silica). In one embodiment, precipitated silica is used. The conventional siliceous pigments employed in this invention are precipitated silicas such as, for example, those obtained by the acidification of a soluble silicate, e.g., sodium silicate.

Various commercially available silicas may be used, such as, only for example herein, and without limitation, silicas commercially available from PPG Industries under the Hi-Sil trademark with designations 210, 243, etc; silicas available from Rhodia, with, for example, designations of Z1165MP and Z165GR and silicas available from Degussa AG with, for example, designations VN2 and VN3, etc.

The vulcanizable rubber composition may include from 1 to 100 phr of carbon black, crosslinked particulate polymer gel, ultra high molecular weight polyethylene (UHMWPE) or plasticized starch.

Commonly employed carbon blacks can be used as a conventional filler.
Representative examples of such carbon blacks include N110, N121, N134, N220, N231, N234, N242, N293, N299, N315, N326, N330, N332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 to 145 g/kg and DBP number ranging from 34 to 150 cm³/100 g.

Other fillers may be used in the rubber composition including particulate fillers including ultra high molecular weight polyethylene (UHMWPE), particulate polymer gels including but not limited to those disclosed in US-A- 6,242,534; US-A- 6,207,757; US-A- 6,133,364; US-A- 6,372,857; US-A- 5,395,891; or US-A-and plasticized starch composite filler including that disclosed in US-A- 5,672,639.

In one embodiment the rubber composition may contain a conventional sulfur containing organosilicon compound. Examples of suitable sulfur containing organosilicon compounds are of the formula:

Z - Alk - Sₙ - Alk - Z IV

in which Z is selected from the group consisting of 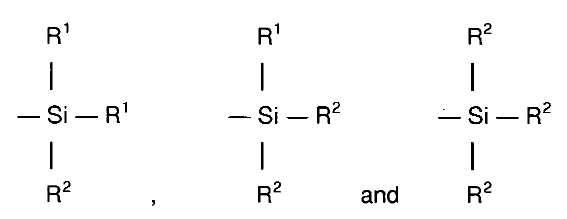 where R¹ is an alkyl group of 1 to 4 carbon atoms, cyclohexyl or phenyl; R² is alkoxy of 1 to 8 carbon atoms, or cycloalkoxy of 5 to 8 carbon atoms; Alk is a divalent hydrocarbon of 1 to 18 carbon atoms and n is an integer of 2 to 8.

In one embodiment, the sulfur containing organosilicon compounds are the 3,3'-bis(trimethoxy or triethoxy silylpropyl) polysulfides. In one embodiment, the sulfur containing organosilicon compounds are 3,3'-bis(triethoxysilylpropyl) disulfide and/or 3,3'-bis(triethoxysilylpropyl) tetrasulfide. Therefore, as to formula IV, Z may be 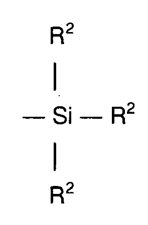 where R² is an alkoxy of 2 to 4 carbon atoms, alternatively 2 carbon atoms; alk is a divalent hydrocarbon of 2 to 4 carbon atoms, alternatively with 3 carbon atoms; and n is an integer of from 2 to 5, alternatively 2 or 4.

In another embodiment, suitable sulfur containing organosilicon compounds include compounds disclosed in US-A- 6,608,125. In one embodiment, the sulfur containing organosilicon compounds includes 3-(octanoylthio)-1-propyltriethoxysilane, CH₃(CH₂)₆C(=O) -S-CH₂CH₂CH₂Si(OCH₂CH₃)₃, which is available commercially as NXT™ from GE Silicones.

In another embodiment, suitable sulfur containing organosilicon compounds include those disclosed in US-A- 2003/0130535. In one embodiment, the sulfur containing organosilicon compound is Si-363 from Degussa.

The amount of the sulfur containing organosilicon compound in a rubber composition will vary depending on the level of other additives that are used. Generally speaking, the amount of the compound will range from 0.5 to 20 phr.
In one embodiment, the amount will range from 1 to 10 phr.

It is readily understood by those having skill in the art that the rubber composition would be compounded by methods generally known in the rubber compounding art, such as mixing the various sulfur-vulcanizable constituent rubbers with various commonly used additive materials such as, for example, sulfur donors, curing aids, such as activators and retarders and processing additives, resins including tackifying resins and plasticizers, fillers, pigments, fatty acid, zinc oxide, waxes, antioxidants and antiozonants and peptizing agents. As known to those skilled in the art, depending on the intended use of the sulfur vulcanizable and sulfur-vulcanized material (rubbers), the additives mentioned above are selected and commonly used in conventional amounts.
Representative examples of sulfur donors include elemental sulfur (free sulfur), an amine disulfide, polymeric polysulfide and sulfur olefin adducts. In one embodiment, the sulfur-vulcanizing agent is elemental sulfur. The sulfur-vulcanizing agent may be used in an amount ranging from 0.5 to 8 phr, alternatively with a range of from 1.5 to 6 phr. Typical amounts of tackifier resins, if used, comprise 0.5 to 10 phr, usually 1 to 5 phr. Typical amounts of processing aids comprise 1 to 50 phr. Typical amounts of antioxidants comprise 1 to 5 phr. Representative antioxidants may be, for example, diphenyl-p-phenylenediamine and others, such as, for example, those disclosed in The Vanderbilt Rubber Handbook (1978), Pages 344 through 346. Typical amounts of antiozonants comprise 1 to 5 phr. Typical amounts of fatty acids, if used, which can include stearic acid comprise 0.5 to 3 phr. Typical amounts of zinc oxide comprise 2 to 5 phr. Typical amounts of waxes comprise 1 to 5 phr. Often microcrystalline waxes are used. Typical amounts of peptizers comprise 0.1 to 1 phr. Typical peptizers may be, for example, pentachlorothiophenol and dibenzamidodiphenyl disulfide.

Accelerators are used to control the time and/or temperature required for vulcanization and to improve the properties of the vulcanizate. In one embodiment, a single accelerator system may be used, i.e., primary accelerator. The primary accelerator(s) may be used in total amounts ranging from 0.5 to 4. In another embodiment, combinations of a primary and a secondary accelerator might be used with the secondary accelerator being used in smaller amounts, such as from 0.05 to 3 phr, in order to activate and to improve the properties of the vulcanizate. In addition, delayed action accelerators may be used which are not affected by normal processing temperatures but produce a satisfactory cure at ordinary vulcanization temperatures. Vulcanization retarders might also be used. Suitable types of accelerators that may be used in the present invention are amines, disulfides, guanidines, thioureas, thiazoles, thiurams, sulfenamides, dithiocarbamates and xanthates. In one embodiment, the primary accelerator is a sulfenamide. If a second accelerator is used, the secondary accelerator may be a guanidine, dithiocarbamate or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage which is conventionally called the "productive" mix stage in which the mixing typically occurs at a temperature, or ultimate temperature, lower than the mix temperature(s) than the preceding non-productive mix stage(s). The rubber composition may be subjected to a thermomechanical mixing step. The thermomechanical mixing step generally comprises a mechanical working in a mixer or extruder for a period of time suitable in order to produce a rubber temperature between 140°C and 190°C. The appropriate duration of the thermomechanical working varies as a function of the operating conditions, and the volume and nature of the components. For example, the thermomechanical working may be from 1 to 20 minutes.

The rubber composition is incorporated into the sidewall of the tire.

The pneumatic tire of the present invention may be a race tire, passenger tire, aircraft tire, agricultural, earthmover, off-the-road, truck tire, and the like. In one embodiment, the tire is a passenger or truck tire. The tire may also be a radial or bias.

The vulcanization is conducted at temperatures ranging from 110°C to 180°C. Any of the usual vulcanization processes may be used such as heating in a press or mold, heating with superheated steam or hot air. Such tires can be built, shaped, molded and cured by various methods which are known and will be readily apparent to those having skill in such art.

The invention is further illustrated by the following example.

### Example 1

In this example, the effect of adding castor oil to a rubber composition is illustrated. Rubber compositions containing diene based elastomer, fillers, process aids, antidegradants, and curatives were prepared following recipes as shown in Table 1. Sample 1, 3 and 5 were controls, and Samples 2, 4 and 6 inventive. All samples were identical in composition except for the composition of the oils.

Cured samples were inspected visually for appearance and qualitatively rated as "brown" or "black" as shown in Table 2. The samples were then quantitatively tested for color using a Color-Guide 4 mm from BYK Gardner GmbH according to one or more of DIN 5033, DIN 5036, DIN 6174, ISO 7724, ASTM D224, ASTM E308, ASTM E313, and ASTM E1164. Samples were tested according to the CIE system using L*C*h coordinates without touching the sample surface, with lighting according to D65/2°. Hue angle h was found to change significantly between the different compounds while C* and L* remained relatively constant. Hue angle h of 20° or below indicated a black sample; hue angle h of 50° or above indicated a brown sample. Results of hue angle h are shown in Table 2. As seen in Table 2, Samples 2, 4 and 6 containing castor oil showed a black appearance while Sample 1, 3 and 5 containing no castor oil were brown in appearance.

The samples were tested for viscoelastic properties using RPA. "RPA" refers to a Rubber Process Analyzer as RPA 2000™ instrument by Alpha Technologies, formerly the Flexsys Company and formerly the Monsanto Company. References to an RPA 2000 instrument may be found in the following publications: H. A. Palowski, et al, Rubber World, June 1992 and January 1997, as well as Rubber & Plastics News, April 26 and May 10, 1993. The "RPA" test results in Table 3 are reported as being from data obtained at 100°C in a dynamic shear mode at a frequency of 1 Hertz and at the reported dynamic strain values. Tensile properties were also measured and reported in Table 3.

**Table 1**

| | **cont** | **inv** | **cont** | **inv** | **cont** | **inv** |
|---|---|---|---|---|---|---|
| **Sample No.** | **1** | **2** | **3** | **4** | **5** | **6** |
| Natural rubber | 35 | 35 | 35 | 35 | 35 | 35 |
| Polybutadiene¹ | 65 | 65 | 65 | 65 | 65 | 65 |
| Carbon Black | 55 | 55 | 53 | 53 | 55 | 55 |
| Resin | 3 | 3 | 3 | 3 | 3 | 3 |
| Waxes² | 3 | 3 | 4.5 | 4.5 | 3 | 3 |
| Antidegradants³ | 5.5 | 5.5 | 5 | 5 | 5 | 5 |
| Curatives⁴ | 5.5 | 5.5 | 5.5 | 5.5 | 5.5 | 5.5 |
| Process Oil⁵ | 15 | 14 | 0 | 0 | 0 | 0 |
| Process Oil⁶ | 0 | 0 | 12 | 11 | 0 | 0 |
| Coconut Oil | 0 | 0 | 0 | 0 | 13 | 12 |
| Castor Oil | 0 | 1 | 0 | 1 | 0 | 1 |

| | | | | | | |
|---|---|---|---|---|---|---|
| ¹ Budene 1207, from The Goodyear Tire & Rubber Company ² microcrystalline and paraffinic waxes ³ p-phenylene diamine type ⁴ Stearic acid, zinc oxide, sulfur and sulfenamide accelerator ⁵ DAE grade process oil as available from Total under the Exarol designation ⁶ Naphthenic process oil as available from Shell under the Gravex designation | | | | | | |

**Table 2**

| **Sample No.** | **1** | **2** | **3** | **4** | **5** | **6** |
|---|---|---|---|---|---|---|
| Castor Oil, phr | 0 | 1 | 0 | 1 | 0 | 1 |
| Appearance | brown | black | brown | black | brown | black |
| Hue angle h° ¹ | 60 | 15 | 66 | 9 | 63 | 17 |

| | | | | | | |
|---|---|---|---|---|---|---|
| ¹ Average of 4 to 5 measured values | | | | | | |

**Table 3**

| **Sample No.** | **1** | **2** | **3** | **4** | **5** | **6** |
|---|---|---|---|---|---|---|
| Castor Oil, phr | 0 | 1 | 0 | 1 | 0 | 1 |

| **RPA, 100°C, 1 Hz** | | | | | | |
|---|---|---|---|---|---|---|
| G', 1 % strain (MPa) | 0.866 | 0.861 | 0.823 | 0.823 | 0.887 | 0.855 |
| G', 5% strain (MPa) | 0.829 | 0.829 | 0.797 | 0.797 | 0.871 | 0.829 |
| G', 10% strain (MPa) | 0.483 | 0.484 | 0.484 | 0.484 | 0.513 | 0.495 |
| tan delta, 10% strain | 0.168 | 0.169 | 0.163 | 0.162 | 0.164 | 0.164 |
| Shore A Hardness 23°C | 45.7 | 45.8 | 46.4 | 45.7 | 47.1 | 45.8 |

| **Ring Modulus, 23°C** | | | | | | |
|---|---|---|---|---|---|---|
| Elongation at break, % | 755 | 730 | 710 | 692 | 668 | 688 |
| Modulus 100%, MPa | 0.9 | 0.9 | 0.9 | 0.9 | 1.0 | 0.9 |
| Modulus 300%, MPa | 4.1 | 4.2 | 4.3 | 4.2 | 4.7 | 4.4 |
| Tensile Strength, MPa | 13.0 | 12.5 | 12.4 | 11.9 | 12.3 | 12.1 |

As shown in Table 2, samples containing 1 phr of castor oil surprisingly and unexpectedly showed a black color index, as compared to samples containing no castor oil which showed a brown color index. Even sample 5 containing coconut oil failed to have a black surface without castor oil (compared to sample 6).

## Claims

1. A method for maintaining the black sidewall appearance of a tire, the method comprising the step of fabricating the tire with a rubber sidewall compound comprising 100 parts by weight of at least one diene based rubber; from 10 to 70 parts by weight, per 100 parts by weight of diene based rubber (phr) of a rubber process oil selected from the group consisting of aromatic, paraffinic, naphthenic, vegetable oils other than castor oil, and low polycyclic aromatic (PCA) oils including MES, TDAE, SRAE and heavy naphthenic oils; and from 0.5 to 3 parts by weight, per 100 parts by weight of diene based rubber (phr) of a triglyceride derived from fatty acids comprising at least 80 percent by weight of at least one member of the group consisting of ricinoleic acid and 12-hydroxy stearic acid.

2. A pneumatic tire comprising a sidewall, the sidewall comprising a rubber composition, the rubber composition comprising 100 parts by weight of at least one diene based rubber; from 10 to 70 parts by weight, per 100 parts by weight of diene based rubber (phr) of a rubber process oil selected from the group consisting of aromatic, paraffinic, naphthenic, vegetable oils other than castor oil, and low polycyclic aromatic oils (PCA) including MES, TDAE, SRAE and heavy naphthenic oils; and from 0.5 to 3 parts by weight, per 100 parts by weight of diene based rubber (phr) of a triglyceride derived from fatty acids comprising at least 80 percent by weight of at least one member of the group consisting of ricinoleic acid and 12-hydroxy stearic acid.

3. The tire of claim 2, wherein the triglyceride is derived from fatty acids comprising at least 85 percent by weight of ricinoleic acid.

4. The tire of claim 2, wherein the triglyceride is derived from fatty acids comprising at least 85 percent by weight of 12-hydroxy stearic acid.

5. The tire of claim 2, wherein the triglyceride is derived from fatty acids comprising ricinoleic acid, linoleic acid, oileic acid, stearic acid, palmitic acid, dihydroxystearic acid, linolenic acid, and eicosanoic acid.

6. The tire of at least one of the previous claims, wherein the triglyceride is present in a concentration ranging from 1 to 2 parts by weight, per 100 parts by weight of diene based rubber.

7. The tire of at least one of the previous claims, wherein the diene based rubber is selected from the group consisting of natural rubber, synthetic polyisoprene, styrene-butadiene rubber, and polybutadiene.

8. The tire of at least one of the previous claims, wherein the sidewall has a hue angle of 20 or less as measured following one or more of DIN 5033, DIN 5036, DIN 6174, ISO 7724, ASTM D224, ASTM E308, ASTM E313, and ASTM E1164.

## Patentansprüche

1. Verfahren zur Aufrechterhaltung des Aussehens der schwarzen Seitenwand eines Reifens, wobei das Verfahren den Schritt des Fertigens des Reifens mit einer Seitenwand-Gummimischung umfasst, umfassend 100 Gewichtsteile mindestens eines dienbasierten Kautschuks; 10 bis 70 Gewichtsteile je 100 Gewichtsteile dienbasierten Kautschuks (ThK) eines Kautschukprozessöls, ausgewählt aus der Gruppe, bestehend aus aromatischen, paraffinischen, naphthenischen, pflanzlichen Ölen mit Ausnahme von Rizinusöl, und niedrigen polyzyklischen aromatischen (PCA)-Ölen, einschließlich MES, TDAE, SRAE und Naphthen-Schwerölen; und von 0,5 bis 3 Gewichtsteile je 100 Gewichtsteile dienbasierten Kautschuks (ThK) eines Triglycerids, abgeleitet von Fettsäuren, umfassend mindestens 80 Gewichtsprozent mindestens eines Mitgliedes der Gruppe bestehend aus Rizinolsäure und 12-Hydroxy-Stearinsäure.

2. Luftreifen, umfassend eine Seitenwand, wobei die Seitenwand eine Kautschukzusammensetzung umfasst, wobei die Kautschukzusammensetzung 100 Gewichtsteile mindestens eines dienbasierten Kautschuks umfasst; 10 bis 70 Gewichtsteile je 100 Gewichtsteile dienbasierten Kautschuks (ThK) eines Kautschukprozessöls, ausgewählt aus der Gruppe, bestehend aus aromatischen, paraffinischen, naphthenischen, pflanzlichen Ölen mit Ausnahme von Rizinusöl, und niedrigen polyzyklischen aromatischen (PCA)-Ölen, einschließlich MES, TDAE, SRAE und Naphthen-Schwerölen; und von 0,5 bis 3 Gewichtsteile je 100 Gewichtsteile dienbasierten Kautschuks (ThK) eines Triglycerids, abgeleitet von Fettsäuren, umfassend mindestens 80 Gewichtsprozent mindestens eines Mitgliedes der Gruppe bestehend aus Rizinolsäure und 12-Hydroxy-Stearinsäure.

3. Reifen nach Anspruch 2, wobei das Triglycerid von Fettsäuren abgeleitet ist, die mindestens 85 Gewichtsprozent Rizinolsäure umfassen.

4. Reifen nach Anspruch 2, wobei das Triglycerid von Fettsäuren abgeleitet ist, die mindestens 85 Gewichtsprozent 12-Hydroxy-Stearinsäure umfassen.

5. Reifen nach Anspruch 2, wobei das Triglycerid von Fettsäuren abgeleitet ist, die Rizinolsäure, Linolsäure, Ölsäure, Stearinsäure, Palmitinsäure, Dihydroxystearinsäure, Linolensäure und Eicosansäure umfassen.

6. Reifen nach mindestens einem der vorgenannten Ansprüche, wobei das Triglycerid in einer sich auf 1 bis 2 Gewichtsteile je 100 Gewichtsteile dienbasierten Kautschuks belaufenden Konzentration vorhanden ist.

7. Reifen nach mindestens einem der vorgenannten Ansprüche, wobei der dienbasierte Kautschuk aus der aus Naturkautschuk, synthetischem Polyisopren, Styrol-Butadien-Kautschuk und Polybutadien bestehenden Gruppe ausgewählt ist.

8. Reifen nach mindestens einem der vorgenannten Ansprüche, wobei die Seitenwand einen Farbtonwinkel von 20 oder weniger aufweist, gemessen nach einem oder mehreren von DIN 5033, DIN 5036, DIN 6174, ISO 7724, ASTM D224, ASTM E308, ASTM E313 und ASTM E1164.

## Revendications

1. Procédé pour maintenir l'aspect de flanc noir d'un bandage pneumatique, le procédé comprenant l'étape consistant à confectionner le bandage pneumatique avec un composé de flanc en caoutchouc comprenant, à concurrence de 100 parties en poids, au moins un caoutchouc à base diénique ; à concurrence de 10 à 70 parties en poids par 100 parties en poids du caoutchouc à base diénique (phr) d'une huile plastifiante pour le caoutchouc choisi parmi le groupe constitué par des huiles aromatiques, paraffiniques, naphténiques, végétales autres que l'huile de castor, et des huiles à faible teneur en composés aromatiques polycycliques (PCA), y compris les huiles MES, TDAE, SRAE et des huiles naphténiques lourdes ; et à concurrence de 0,5 à 3 parties en poids, par 100 parties en poids du caoutchouc à base diénique (phr) un triglycéride qui dérive d'acides gras, comprenant à concurrence d'au moins 80 % en poids, au moins un membre choisi parmi le groupe constitué par l'acide ricinoléique et l'acide 12-hydroxystéarique.

2. Bandage pneumatique comprenant un flanc, le flanc comprenant une composition de caoutchouc, la composition de caoutchouc comprenant, à concurrence de 100 parties en poids, au moins un caoutchouc à base diénique ; à concurrence de 10 à 70 parties en poids par 100 parties en poids du caoutchouc à base diénique (phr) d'une huile plastifiante pour le caoutchouc choisi parmi le groupe constitué par des huiles aromatiques, paraffiniques, naphténiques, végétales autres que l'huile de castor, et des huiles à faible teneur en composés aromatiques polycycliques (PCA), y compris les huiles MES, TDAE, SRAE et des huiles naphténiques lourdes ; et à concurrence de 0,5 à 3 parties en poids, par 100 parties en poids du caoutchouc à base diénique (phr) un triglycéride qui dérive d'acides gras, comprenant à concurrence d'au moins 80 % en poids, au moins un membre choisi parmi le groupe constitué par l'acide ricinoléique et l'acide 12-hydroxystéarique.

3. Bandage pneumatique selon la revendication 2, dans lequel le triglycéride dérive d'acides gras comprenant de l'acide ricinoléique à concurrence d'au moins 85 % en poids.

4. Bandage pneumatique selon la revendication 2, dans lequel le triglycéride dérive d'acides gras comprenant de l'acide 12-hydroxystéarique à concurrence d'au moins 85 % en poids.

5. Bandage pneumatique selon la revendication 2, dans lequel le triglycéride dérive d'acides gras comprenant de l'acide ricinoléique, l'acide linoléique, l'acide oléique, l'acide stéarique, l'acide palmitique, l'acide dihydroxystéarique, l'acide linolénique et l'acide éicosanoïque.

6. Bandage pneumatique selon au moins une des revendications précédentes, dans lequel le triglycéride est présent en une concentration qui se situe dans la plage de 1 à 2 parties en poids, par 100 parties en poids du caoutchouc à base diénique.

7. Bandage pneumatique selon au moins une des revendications précédentes, dans lequel le caoutchouc à base diénique est choisi parmi le groupe constitué par le caoutchouc naturel, du polyisoprène synthétique, du caoutchouc de styrène-butadiène et du polybutadiène.

8. Bandage pneumatique selon au moins une des revendications précédentes, dans lequel le flanc possède un angle de tonalité chromatique s'élevant à 20 ou moins comme mesuré conformément à une ou plusieurs normes telles que DIN 5033, DIN 5036, DIN 6174, ISO 7724, ASTM D224, ASTM E308, ASTM E313 et ASTM E1164.
